(19) Europäisches Patentamt

European Patent Office

Office européen des brevets

(11) Veröffentlichungsnummer: **0 419 838 B1**

(12) **EUROPÄISCHE PATENTSCHRIFT**

(45) Veröffentlichungstag der Patentschrift: **13.04.94**

(21) Anmeldenummer: **90115962.4**

(22) Anmeldetag: **21.08.90**

(51) Int. Cl.5: **C01B 33/18**

(54) **Kristallines Siliziumdioxid.**

(30) Priorität: **30.08.89 DE 3928688**

(43) Veröffentlichungstag der Anmeldung:
**03.04.91 Patentblatt 91/14**

(45) Bekanntmachung des Hinweises auf die
Patenterteilung:
**13.04.94 Patentblatt 94/15**

(84) Benannte Vertragsstaaten:
**AT BE CH DE DK ES FR GB GR IT LI LU NL SE**

(56) Entgegenhaltungen:
**EP-A- 0 017 028**
**EP-A- 0 123 060**
**DE-A- 2 751 443**
**US-A- 4 344 927**

(73) Patentinhaber: **Kali-Chemie Aktiengesellschaft**
**Hans-Böckler-Allee 20**
**D-30173 Hannover(DE)**

(72) Erfinder: **Meyer-Anderson, Andreas**
**Stolbergerstrasse 8**
**D-2800 Bremen 1(DE)**
Erfinder: **Schwetje, Norbert**
**Sögelerstrasse 76**
**D-3000 Hannover 72(DE)**

(74) Vertreter: **Lauer, Dieter, Dr.**
**c/o Kali-Chemie Aktiengesellschaft**
**Hans-Böckler-Allee 20**
**D-30173 Hannover (DE)**

**Beschreibung**

Die Erfindung betrifft ein kristallines Siliziumdioxid und ein Verfahren zur Herstellung desselben.

Siliziumdioxid kann im festen Zustand in verschiedenen kristallinen Modifikationen auftreten. Die verschiedenen kristallinen Formen von Siliziumdioxid, die als Siliziumdioxidpolymorphe bezeichnet werden können, finden sich in der Natur oder sie kommen als synthetische Formen vor, die offenbar kein natürliches Gegenstück haben. Zu den natürlichen kristallinen Formen des Siliziumdioxides gehören die in unterschiedlichen Temperaturbereichen stabilen polymorphen Formen, die als Quarz, Tridymit und Cristobalit bekannt sind. Als bekannte synthetische kristalline Siliziumdioxidpolymorphe sind z.B. Coesit, Stishovit und Keatit zu nennen.

Ein weiteres kristallines Siliziumdioxidpolymorph ist im Stand der Technik unter der Bezeichnung Silikalit bekannt, z.B. aus der deutschen Offenlegungscchrift 2751443. Dieses kristalline Siliziumdioxid, welches durch hydrothermale Reaktion von Wasser, amorphem Siliziumdioxid und quartären Stickstoff- oder Phosphorverbindungen bei pH-Werten von wenigstens 10 hergestellt wird, stellt ein im wesentlichen aluminiumfreies Molekularsieb der chemischen Zusammensetzung von im wesentlichen $(SiO_2)_n$ dar, welches sich zur Entfernung von organischen Verbindungen aus Wasser durch selektive Adsorption eignet. Bedingt durch den hohen Alkaligehalt während der Herstellung dieses Silikalites becteht jedoch die Gefahr der Ausbildung von Fehlstellen, die Alkalikationen im Siliziumdioxidgerüst reversibel binden. Solche im Gerüst vorhandenen Alkalikationen können leicht durch andere Kationen ausgetauscht werden und verursachen dadurch in mehr oder weniger geringem Ausmaß Ionenaustauscheigenschaften, welche für diverse Anwendungen (z.B. Adsorption) dieser kristallinen Siliziumdioxide jedoch nachteilig und unerwünscht sind.

Die bekannten Siliziumdioxidpolymorphe besitzen zwar einerseits im wesentlichen dieselbe chemische Zusammensetzung der allgemeinen Formel $(SiO_2)_n$, unterscheiden sich jedoch andererseits in ihren physikalisch-chemischen Eigenschaften und in ihrer Stabilität unter verschiedenen Temperatur-Druck-Bedingungen, worin sich die Individualität der verschiedenen Siliziumdioxidpolymorphe manifestiert. Die individuellen kristallinen Siliziumdioxidpolymorphe lassen sich durch Röntgenbeugungsdaten bzw. -diagramme, die Angabe von makroskopischen Parametern, wie z.B. spezifisches Gewicht oder Porengröße, oder auch durch andere Eigenschaften wie z.B. das Adsorptionsverhalten charakterisieren. Als Mittel der Wahl werden hierbei die Röntgenbeugungsdaten bevorzugt, da diese das einzigartige dreidimensionale Gerüst dokumentieren, in welchem die Siliziumdioxid- und Sauerstoffatome im jeweiligen Siliziumdioxidpolymorph angeordnet sind.

Obwohl die Eigenschaften der im Stand der Technik bekannten Siliziumdioxidpolymorphe bereits eine Reihe von Problemlösungen ermöglichen, besteht auch heute noch ein reger Bedarf an neuen, kristallinen Siliziumdioxiden, die leicht und mit hoher Reinheit herstellbar sind und sich durch günstige Eigenschaften auszeichnen.

Es bestand daher die Aufgabe, neue kristalline Siliziumdioxide herzustellen, die einerseits über eine für Molekularsiebe charakteristische gleichförmige Porenstruktur verfügen, andererseits jedoch nicht das für viele Anwendungen nachteilige Ionenaustauschvermögen aufweisen, wie es für Molekularsiebe vom Typ der Alumosilikat-Zeolithe gefunden wird.

Zur Lösung dieser Aufgabe schlägt die Erfindung neue kristalline Siliziumdioxide vor, die durch wenigstens 2-stündiges, vorzugsweise 2- bis 6-stündiges, Kalzinieren in Luft bei wenigstens 550 °C, vorzugsweise 600 bis 1000 °C. erhältlich sind, ein Röntgenpulverbeugungsdiagramm mit den folgenden mittleren bis intensiven d-Werten

d-Å

11,0 ± 0.2 (1 oder 2 Werte in diesem Bereich)

3,87 ± 0,03

3,41 ± 0.02

und ein Porenvolumen von wenigstens 1 cm$^3$/g aufweisen.

Die genannten d-Werte oder Linien stehen hierbei für die interplanaren Abstände in der Einheit Å (Ångström), wobei diese mittleren bis intensiven d-Werte relative Intensitäten von etwa 30 bis 100 % aufweisen, Die Röntgenbeugungsspektren wurden durch Messung mit $CuK_\alpha$-Strahlung bei 36 KeV und 22 mA auf einem Phillips-Diffraktometer erhalten. Die kristallinen Siliziumdioxide nach der Erfindung besitzen in der frisch kalzinierten Form bei 25 °C ein spezifisches Gewicht von 1.65 bis 1,70 g/cm$^3$ (Genauigkeit ± 0,03 g/cm$^3$ ), gemessen durch Wasserverdrängung.

Die erfindungsgemäßen Siliziumdioxide zeichnen sich weiterhin durch besonders große Porenvolumina aus, die bei Werten oberhalb von 1,0 cm$^3$/g liegen. Insbesondere weisen bevorzugte Siliziumdioxide Porenvolumina von 1,0 bis 3,0 cm$^3$/g auf. Die Porenvolumina können nach der SHELL-Methode unter Verwendung von Ethanol bestimmt werden. Hierzu werden Proben der erfindungsgemäßen Siliziumdioxide, welche zuvor nochmals 1 h bei ca. 450 bis 500 °C kalziniert wurden, bei Raumtemperatur in Glasflaschen zunächst mit einer Ethanolmenge versetzt, die etwa 90 % des Gesamtporenvolumens entspricht. Anschließend werden die verschlossenen Glasflaschen heftig geschüttelt, gekühlt und das Probengefäß gedreht. Dieser Vorgang wird unter Zugabe weiteren Ethanols solange wiederholt, bis kein freies Fließen der Probe mehr beobachtet werden kann und die Probe eine gewisse Zeit, z.B. länger als 2 Sekunden, an der Glasflaschenwandung haftet (Endpunkt).

In einer vorteilhaften Variante der Erfindung zeichnen sich die kristallinen Siliziumdioxide durch die folgenden 10 stärksten d-Werte aus:

d-Å

11,65 ± 0,2
11,1 ± 0,2
10,85 ± 0,2
4,36 ± 0,03
4,19 ± 0,03
3,87 ± 0,03
3,68 ± 0,03
3,61 ± 0,02
3,46 ± 0,02
3,41 ± 0,02

Die kristallinen Siliziumdioxidpolymorphe dieser Variante der Erfindung haben in der frisch kalzinierten Form bei 25 °C ein spezifisches Gewicht von etwa 1,69 ± 0,03 g/cm$^3$. Sie weisen Porenvolumina von 1 bis 2 cm$^3$/g, vorzugsweise von 1,1 bis 1,6 cm$^3$/g, auf. Die Daten der Röntgenpulverbeugungsdiagramme typischer Siliziumdioxide nach der Erfindung sind in den Tabellen I und II wiedergegeben.

Tabelle I

Röntgenpulverdiffraktogramm von Beispiel 1

| d-A | 2θ | rel.Inten-sität [%] | d-A | 2θ | rel.Inten-sität [%] |
|---|---|---|---|---|---|
| 17,50 | 5,05 | 3 | 3,51 | 25,4 | 4 |
| 11,95 | 7,4 | 7 | 3,46 | 25,75 | 22 |
| 11,63 | 7,6 | 38 | 3,40 | 26,2 | 31 |
| 11,05 | 8,0 | 28 | 3,25 | 27,4 | 1 |
| 10,81 | 8,18 | 34 | 3,23 | 27,6 | 1 |
| 10,05 | 8,8 | 20 | 3,16 | 28,2 | 1 |
| 9,77 | 9,05 | 3 | 3,12 | 28,6 | 1 |
| 9,03 | 9,8 | 2 | 3,05 | 29,3 | 0,5 |
| 8,72 | 10,15 | 9 | 2,99 | 29,9 | 1 |
| 8,19 | 10,8 | 0,5 | 2,90 | 30,8 | 1 |
| 7,38 | 12,0 | 3 | 2,78 | 32,2 | 1 |
| 7,25 | 12,2 | 7 | 2,73 | 32,8 | 3 |
| 7,03 | 12,6 | 6 | 2,71 | 33,0 | 2 |
| 6,92 | 12,8 | 10 | 2,61 | 34,3 | 1 |
| 6,71 | 13,2 | 2 | 2,55 | 35,2 | 1 |
| 6,37 | 13,9 | 4 | 2,52 | 35,7 | 8 |
| 6,28 | 14,1 | 5 | 2,50 | 36,0 | 11 |
| 6,07 | 14,6 | 6 | 2,48 | 36,3 | 3 |
| 6,01 | 14,75 | 5 | 2,46 | 36,5 | 1 |
| 5,87 | 15,1 | 11 | 2,44 | 36,9 | 2 |
| 5,83 | 15,2 | 11 | 2,41 | 37,4 | 1 |
| 5,75 | 15,4 | 5 | 2,39 | 37,6 | 0,5 |
| 5,70 | 15,55 | 3 | 2,36 | 38,1 | 2 |
| 5,57 | 15,9 | 1 | | | |
| 5,42 | 16,35 | 5 | | | |
| 5,36 | 16,55 | 1 | | | |
| 5,10 | 17,4 | 2 | | | |
| 5,00 | 17.75 | 2 | | | |
| 4,87 | 18,2 | 1 | | | |
| 4,63 | 19,15 | 0,5 | | | |
| 4,56 | 19,45 | 1 | | | |
| 4,43 | 20,05 | 4 | | | |
| 4,35 | 20,4 | 22 | | | |
| 4,27 | 20,8 | 11 | | | |
| 4,19 | 21,18 | 100 | | | |
| 4,01 | 22,15 | 14 | | | |
| 3,93 | 22,6 | 17 | | | |
| 3,88 | 22,95 | 66 | | | |
| 3,83 | 23,25 | 16 | | | |
| 3,75 | 23,75 | 6 | | | |
| 3,72 | 23,95 | 9 | | | |
| 3,68 | 24,2 | 21 | | | |
| 3,61 | 24,65 | 24 | | | |

Tabelle II

Röntgenpulverdiffraktogramm von Beispiel 2

| d-Å | 2θ | rel.Inten-sität [%] | d-Å | 2θ | rel.Inten-sität [%] |
|---|---|---|---|---|---|
| 17,50 | 5,05 | 13 | 3,46 | 25,73 | 51 |
| 11,95 | 7,4 | 13 | 3,41 | 26,15 | 81 |
| 11,71 | 7,55 | 34 | 3,25 | 27,4 | 1 |
| 11,19 | 7,9 | 39 | 3,22 | 27,7 | 2 |
| 10,85 | 8,15 | 100 | 3,16 | 28,2 | 0,5 |
| 10,07 | 8,78 | 16 | 3,12 | 28,6 | 1 |
| 9,72 | 9,1 | 4 | 3,05 | 29,3 | 1 |
| 9,03 | 9,8 | 6 | 2,99 | 29,9 | 3 |
| 8,72 | 10,15 | 30 | 2,90 | 30,8 | 5 |
| 8,12 | 10,9 | 1 | 2,78 | 32,2 | 3 |
| 7,31 | 12,1 | 8 | 2,73 | 32,75 | 4 |
| 7,23 | 12,25 | 12 | 2,71 | 33,0 | 2 |
| 7,03 | 12,6 | 20 | 2,61 | 34,3 | 1 |
| 6,94 | 12,75 | 32 | 2,55 | 35,2 | 2 |
| 6,71 | 13,2 | 0,5 | 2,52 | 35,65 | 7 |
| 6,37 | 13,9 | 8 | 2,49 | 36,1 | 1 |
| 6,24 | 14,2 | 12 | 2,48 | 36,3 | 0,5 |
| 6,07 | 14,6 | 7 | 2,47 | 36,4 | 1 |
| 5,99 | 14,8 | 6 | 2,44 | 36,9 | 2 |
| 5,89 | 15,05 | 9 | 2,41 | 37,4 | 1 |
| 5,83 | 15,2 | 9 | 2,39 | 37,6 | 1 |
| 5,74 | 15,45 | 3 | 2,37 | 38,0 | 3 |
| 5,70 | 15,55 | 1 | | | |
| 5,57 | 15,9 | 2 | | | |
| 5,44 | 16,3 | 13 | | | |
| 5,36 | 16,55 | 1 | | | |
| 5,10 | 17,4 | 7 | | | |
| 5,02 | 17,65 | 7 | | | |
| 4,87 | 18,2 | 1 | | | |
| 4,62 | 19,2 | 3 | | | |
| 4,58 | 19,4 | 3 | | | |
| 4,43 | 20,05 | 6 | | | |
| 4,36 | 20,35 | 48 | | | |
| 4,27 | 20,8 | 13 | | | |
| 4,19 | 21,2 | 77 | | | |
| 4,00 | 22,2 | 2 | | | |
| 3,93 | 22,65 | 15 | | | |
| 3,87 | 23,0 | 53 | | | |
| 3,83 | 23,25 | 20 | | | |
| 3,75 | 23,75 | 6 | | | |
| 3,72 | 23,9 | 18 | | | |
| 3,68 | 24,2 | 42 | | | |
| 3,61 | 24,65 | 61 | | | |
| 3,51 | 25,4 | 1 | | | |

In einer weiteren Variante der erfindungsgemäßen kristallinen Siliziumdioxide zeichnen sich diese durch die folgenden 8 stärksten d-Werte aus:

d-Å

17,7 ± 0,2

11,2 ± 0,2

10,0 ± 0,1

3,86 ± 0,03

3,82 ± 0,03

3,75 ± 0,02

3,72 ± 0,02

3,41 ± 0,02

Die kristallinen Siliziumdioxide dieser Variante der Erfindung haben in der frisch kalzinierten Form bei 25 °C ein spezifisches Gewicht von etwa 1,66 ± 0,03 $g/cm^3$ .Sie weisen Porenvolumina von 2 bis 3 $cm^3/g$, vorzugsweise von 2,3 bis 2,8 $cm^3/g$, auf. Die Daten des Röntgenpulverbeugungsdiagramms eines typischen Siliziumdioxids dieser Erfindungsvariante ist in Tabelle III wiedergegeben.

## Tabelle III

### Röntgenpulverdiffraktogramm von Beispiel 3

| d-A | 2θ | rel.Inten-sität [%] | d-A | 2θ | rel.Inten-sität [%] |
|---|---|---|---|---|---|
| 17,67 | 5,0 | 24 | 3,41 | 26,1 | 100 |
| 11,95 | 7,4 | 5 | 3,25 | 27,4 | 3 |
| 11,63 | 7,6 | 16 | 3,22 | 27,7 | 1 |
| 11,19 | 7,9 | 49 | 3,18 | 28,1 | 1 |
| 10,78 | 8,2 | 6 | 3,13 | 28,5 | 2 |
| 10,05 | 8,8 | 48 | 3,05 | 29,3 | 11 |
| 9,77 | 9,05 | 9 | 2,98 | 29,95 | 8 |
| 9,03 | 9,8 | 5 | 2,90 | 30,8 | 2 |
| 8,67 | 10,2 | 10 | 2,78 | 32,2 | 2 |
| 8,19 | 10,8 | 1 | 2,73 | 32,8 | 3 |
| 7,38 | 12,0 | 7 | 2,71 | 33,0 | 1 |
| 7,25 | 12,2 | 14 | 2,61 | 34,4 | 2 |
| 7,03 | 12,6 | 2 | 2,55 | 35,2 | 3 |
| 6,97 | 12,7 | 1 | 2,52 | 35,7 | 3 |
| 6,71 | 13,2 | 4 | 2,49 | 36,1 | 3 |
| 6,33 | 13,98 | 17 | 2,48 | 36,3 | 2 |
| 6,25 | 14,17 | 17 | 2,45 | 36,65 | 1 |
| 6,07 | 14,6 | 11 | 2,43 | 36,95 | 0,5 |
| 5,99 | 14,8 | 14 | 2,41 | 37,3 | 2 |
| 5,87 | 15,1 | 1 | 2,39 | 37,6 | 2 |
| 5,79 | 15,3 | 5 | 2,36 | 38,1 | 0,5 |
| 5,75 | 15,4 | 6 | | | |
| 5,70 | 15,55 | 9 | | | |
| 5,57 | 15,9 | 7 | | | |
| 5,41 | 16,4 | 2 | | | |
| 5,37 | 16,5 | 2 | | | |
| 5,06 | 17,52 | 13 | | | |
| 4,98 | 17,8 | 5 | | | |
| 4,84 | 18,35 | 1 | | | |
| 4,63 | 19,15 | 0,5 | | | |
| 4,60 | 19,3 | 4 | | | |
| 4,42 | 20,1 | 8 | | | |
| 4,35 | 20,4 | 9 | | | |
| 4,27 | 20,8 | 7 | | | |
| 4,17 | 21,3 | 2 | | | |
| 4,00 | 22,2 | 1 | | | |
| 3,92 | 22,7 | 8 | | | |
| 3,86 | 23,07 | 59 | | | |
| 3,82 | 23,28 | 38 | | | |
| 3,75 | 23,7 | 22 | | | |
| 3,72 | 23,9 | 22 | | | |
| 3,65 | 24,4 | 15 | | | |
| 3,60 | 24,7 | 8 | | | |
| 3,51 | 25,4 | 2 | | | |
| 3,47 | 25,7 | 10 | | | |

Die gleichmäßige Porenstruktur verleiht den erfindungsgemäßen Siliziumdioxiden größenselektive Molekularsiebeigenschaften und erlauben deren Verwendung in Verfahren zur Stofftrennung mittels Molekularsieben. Bei anderen Anwendungen dient das erfindungsgemäße Siliziumdioxid als größenselektives Adsorptionsmittel. Das Adsorptionsmittel hat auch sehr günstige hydrophobe/organophile Eigenschaften, die es gestatten, das Siliziumdioxid zu benutzen, um organische Stoffe aus Wasser, entweder in der flüssigen oder in der Dampfphase, selektiv zu adsorbieren.

Die kristallinen Siliziumdioxide der Erfindung sind im wesentlichen völlig aluminiumfrei. Aluminium ist allenfalls im ppm-Bereich vorhanden, sofern die verwendeten Ausgangsmaterialien mit Aluminium kontaminiert waren. Darüber hinaus weisen die erfindungsgemäßen kristallinen Siliziumdioxide herstellungsbedingt äußerst geringe Alkalimetallgehalte auf. Die Aluminiumfreiheit und hohe Alkalimetallarmut der erfindungsgemäßen Siliziumdioxidprodukte bewirken ein stark vermindertes Ionenaustauschvermögen, d.h. Kationenaustauschvermögen. Das Fehlen von Ionenaustauscheigenschaften erweist sich insbesondere für Anwendungen als vorteilhaft, bei denen das hydrophobe Siliziumdioxid-Adsorptionsmittel der Erfindung zur selektiven Beseitigung von organischen Stoffen aus Abwasser eingesetzt werden sollen. Da keine austauschbaren Kationen im Siliziumdioxid vorliegen, kann dieses auch mit solchen Abwasserströmen in Kontakt gebracht werden, die eine Kationenquelle enthalten, ohne daß es durch Austausch oder Festhalten dieser Kationen im Siliziumdioxid-Adsorptionsmittel zu einer Änderung des hydrophoben Charakters und/oder der Porengröße kommt. Bei der vorstehend genannten Anwendung wird beispielsweise eine wäßrige Lösung bzw. ein zuströmendes Abwasser, das eine organische Verbindung enthält, mit dem Siliziumdioxid der Erfindung in Kontakt gebracht, so daß mindestens ein Teil der organischen Verbindung in den inneren Adsorptionsoberflächen des Siliziumdioxides adsorbiert wird und die behandelte wäßrige Lösung danach, gegebenenfalls als abfließender Strom, zurückgewonnen wird.

Die Erfindung betrifft auch ein Verfahren zur Herstellung der vorstehend beschriebenen kristallinen Siliziumdioxide, welches sich dadurch auszeichnet, daß man ein Reaktionsgemisch, enthaltend nichtkristallines Siliziumdioxid und pro Mol des nichtkristallinen Siliziumdioxides

- ausgedrückt in Molen an Oxid 0,001 bis 0,2 Mol Alkalimetalloxid und/oder -hydroxid,
- 0,35 bis 1,0 Mol organisches Amin und
- 10 bis 200 Mol Wasser,

bei Temperaturen von 80 bis 250 °C, vorzugsweise 120 bis 180 °C, einer hydrothermalen Behandlung unterwirft, bis sich ein Amin enthaltender, kristalliner Siliziumdioxid-Vorläufer gebildet hat, wonach man diesen Vorläufer isoliert und durch Kalzinieren bei wenigstens 550 °C, vorzugsweise bei 600 bis 1000 °C, in das kristalline, aminfreie Siliziumdioxid überführt.

Eine bevorzugte Variante des erfindungsgemäßen Verfahrens zeichnet sich dadurch aus, daß das Reaktionsgemisch pro Mol des nichtkristallinen Siliziumdioxides die übrigen Bestandteile in folgenden Mengen, bezogen auf ein Mol nichtkristallines Siliziumdioxid, enthält:

- ausgedrückt in Molen an Oxid 0,02 bis 0,05 Mol Alkalimetalloxid und/oder -hydroxid,
- 0,35 bis 0,7 Mol organisches Amin und
- 10 bis 15 Mol Wasser.

Durch das Kalzinieren werden die im Vorläufer vorhandenen Aminanteile ausgetrieben bzw. zersetzt. Der genaue Strukturaufbau des Vorläufers ist nicht bekannt. Der Vorläufer hat keine Ionenaustauscheigenschaften, weil er herstellungsbedingt keine negativgeladenen $AlO_4$-Tetraeder als Gerüstbestandteile aufweist und somit auch keine Alkalimetallkationen zum Ausgleich von negativen Elektrovalenzen enthält.

Das eingesetzte Amin hat hierbei vermutlich die Hauptfunktion, ein schablonenartiges Material zu bilden, d.h. die Anordnung der $SiO_4$-Tetraeder in die betreffende Gitterform vorzubereiten, die für das kristalline Siliziumdioxid nach der Erfindung charakteristisch ist. Obwohl eine Festlegung auf diese Theorie nicht beabsichtigt ist, kann hierbei angenommen werden, daß der Amninanteil im Vorläufer vermutlich nur in dem $SiO_4$-Gerüst eingeschlossen ist, jedoch keinen Bestandteil des Gerüstes bildet. Ein besonders bevorzugtes Amin ist hierbei das Tetraethylentetramin (TETA).

Zur Herstellung der erfindungsgemäßen kristallinen Siliziumdioxide reichen bereits geringe Mengen an Alkalimetalloxid bzw. -hydroxid aus, um für eine ausreichende Basizität des Reaktionsgemisches zu sorgen. Für diesen Zweck geeignet sind die Alkalimetalloxide bzw. -hydroxide von Lithium, Natrium oder Kalium, wobei die Hydroxide, insbesondere das Natriumhydroxid, bevorzugt verwendet werden. Es wurde gefunden, daß pro Mol nichtkristallines Siliziumdioxid nicht mehr als 0,4 Mol, vorzugsweise nicht mehr als 0,1 Mol, Alkalimetallhydroxid benötigt werden.

Als weitere Bestandteile enthält das Reaktionsgemisch nur Wasser und eine reaktionsfähige Form von amorphem Siliziumdioxid. Die Anteile des anwesenden Wassers können dabei in weiten Grenzen variiert werden, liegen bevorzugt aber bei Mengen von 10 bis 15 Mol Wasser pro Mol nichtkristallinem Siliziumdioxid.

Das im Reaktionsgemisch vorliegende amorphe Siliziumdioxid kann ganz oder Teilweise aus Alkalimetallsilikat bestehen, wobei dieses in solchen Mengen vorliegt, daß die obengenannten Molverhältnisse zum Alkalimetalloxid und/oder -hydroxid eingehalten werden. Andere Quellen für amorphes Siliziumdioxid sind feste, reaktionsfähige, amorphe Siliziumdioxide wie Rauchsiliziumdioxid, Kieselsol und Kieselgel. Bei der Auswahl der Siliziumdioxidquellen ist jedoch Vorsorge hinsichtlich des darin als Verunreinigung enthaltenen Aluminiumoxides zu treffen, da bei Anwesenheit von Aluminiumoxid im Reaktionssystem die Einlagerung des Aluminiums in das Kristallgefüge des Siliziumdioxidproduktes begünstigt wird. Handelsübliches verfügbares Kieselsol kann typischerweise z.B. 500 bis 700 ppm $Al_2O_3$ enthalten, während Rauchsiliziumdioxid zwischen 80 und 2000 ppm $Al_2O_3$ als Verunreinigung aufweisen kann. Geringe Mengen an $Al_2O_3$, die im Siliziumdioxid vorliegen, ändern jedoch dessen wesentliche Eigenschaften nicht nennenswert. Ein Siliziumdioxidprodukt, das Aluminimoxid und andere Oxidverunreinigungen allenfalls im ppm-Bereich aufweist, ist daher noch keineswegs als ein Metallosilikat anzusprechen, wenngleich ein möglichst geringer Aluminiumgehalt zur Vermeidung von Ionenaustauscheigenschaften erstrebenswert ist.

Die Reihenfolge für die Zumischung der Reagenzien bei der Herstellung des kristallinen Vorläufers ist nicht kritisch. Das Reaktionsgemisch wird bei einer Temperatur von ungefähr 80 bis 250 °C, vorzugsweise 120 bis 180 °C unter autogenem Druck gehalten, bis sich die Kristalle des Vorläufers gebildet haben. Normalerweise liegt der Zeitbedarf hierfür ungefähr zwischen 10 und 400 Stunden, vorzugsweise 50 und 200 Stunden. Das kristalline Vorprodukt wird auf beliebige zweckentsprechende Weise, beispielsweise durch Filtration gewonnen. Vorzugsweise wird das Produkt mit Wasser gewaschen. Es kann in Luft bei ungefähr 100 °C getrocknet werden.

Danach wird der Aminanteil thermisch zersetzt und durch Kalzinieren in einer oxidierenden Atmosphäre (Luft) oder einer inerten Atmosphäre bei Temperaturen von ungefähr 500 bis 1000 °C beseitigt.

Durch die Verwendung nur geringer Mengen an Alkalimetalloxid bzw. -hydroxid im Reaktionsgemisch ist die Gefahr von Verunreinigungen der kristallinen Siliziumdioxidprodukte durch diese Alkalimetallanteile sehr gering. Gegebenenfalls dennoch im Produkt als Verunreinigungen im ppm-Bereich enthaltene Alkalimetallanteile liegen jedoch in einer Form vor, die keinen reversiblen Austausch gegen andere Kationen zuläßt. Oder das im Produkt vorhandene restliche Alkalimetall kann durch Waschen mit einer Alkalimetallhalogenidlösung oder einer wäßrigen Säurelösung von ausreichender Stärke, beispielsweise Salzsäure, beseitigt werden. Die Kristallstruktur wird durch den Kontakt mit den starken Mineralsäure selbst bei erhöhten Temperaturen nicht in nachteiliger Weise beeinflußt, weil in der Kristallstruktur keine säurelöslichen Bestandteile vorliegen. Der äußerst geringe Natriumgehalt der erfindundungsgemäßen Siliziumdioxide bewirkt das Fehlen von Ionenaustauscheigenschaften, was wiederum den Einsatz dieser kristallinen Siliziumdioxide als selektive Adsorptionsmittel in hervorragender Weise unterstützt.

Das erfindungsgemäße Siliziumdioxid, dessen chemische und physikalische Eigenschaften sowie das Verfahren zur Herstellung dieser kristallinen Siliziumdioxide soll anhand der nachfolgenden Beispiele näher erläutert werden, ohne die Erfindung jedoch in ihrem Umfange zu begrenzen.

Beispiel 1:

100 g einer 30 gew.-%-igen wäßrigen kolloidalen Kieselsol-Lösung, die 0,2 Gew.-% an Natriumoxid ($Na_2O$) enthielt, wurden mit 1 g Natriumhydroxid in 43,4 g Wasser homogen vermischt. In diese Lösung wurden 36,55 g Triethylentetramin (technisch) unter ständigem Rühren eingetragen. Für das Gesamtreaktionsgemisch ergab sich damit eine in Molen ausgedrückte Zusammensetzung von:
1 $SiO_2$, 0,063 NaOH, 0,5 TETA und 12,7 $H_2O$.

Das Reaktionsgemisch wurde anschließend in einen 300 ml-Stahlautoklaven mit Tefloneinsatz eingebracht und für 96 Stunden bei 170 °C unter autogenem Druck hydrothermal behandelt. Der entstandene kristalline Niederschlag wurde von der Mutterlauge abfiltriert, mit Wasser gewaschen und bei 120 °C ca. 16 h in Luft getrocknet. Das erhaltene feste kristalline Siliziumdioxidprodukt wurde dann für 4 h in Luft bei 600 °C kalziniert. Das kalzinierte Produkt war frei von organischen Verbindungen und wies keine amorphen Bestandteile mehr auf. Die Analyse der Röntgendiffraktometrie des kalzinierten Produktes ist in Tabelle I dargestellt. Weiterhin ist das Produkt durch folgende Werte charakterisiert:

| - Spezifisches Gewicht | 1,68 ± 0,03 g/cm$^3$, |
|---|---|
| - Porenvolumen | 1,57 ± 0,1 cm$^3$/g. |

Beispiel 2:

100 g einer 30 gew.-%-igen wäßrigen kolloidalen Kieselsol-Lösung, die 0,2 Gew.-% an Natriumoxid ($Na_2O$) enthielt, wurden mit 0,6 g Natriumhydroxid in 43,4 g Wasser homogen vermischt. In diese Lösung wurden 36,55 g Triethylentetramin (technisch) unter ständigem Rühren eingetragen. Für das Gesamtreaktionsgemisch ergab sich damit eine in Molen ausgedrückte Zusammensetzung von:
1 $SiO_2$ , 0,043 NaOH, 0,5 TETA und 12,7 $H_2O$.

Das Reaktionsgemisch wurde anschließend in einen 300 ml-Stahlautoklaven mit Tefloneinsatz eingebracht und für 168 Stunden bei 170 °C unter autogenem Druck hydrothermal behandelt. Der entstandene kristalline Niederschlag wurde von der Mutterlauge abfiltriert, mit Wasser gewaschen und bei 120 °C ca. 16 h in Luft getrocknet. Das erhaltene feste kristalline Siliziumdioxidprodukt wurde dann für 4 h in Luft bei 600 °C kalziniert. Das kalzinierte Produkt war frei von organischen Verbindungen und wies keine amorphen Bestandteile mehr auf. Die Analyse der Röntgendiffraktometrie des kalzinierten Produktes ist in Tabelle II dargestellt. Weiterhin ist das Produkt durch folgende Werte charakterisiert:

| - Spezifisches Gewicht | $1,69 \pm 0,03$ g/cm$^3$, |
|---|---|
| - Porenvolumen | $1,10 \pm 0,1$ cm$^3$/g. |

Beispiel 3:

100 g einer 30 gew.-%-igen wäßrigen kolloidalen Kieselsol-Lösung, die 0,2 Gew.-% an Natriumoxid ($Na_2O$) enthielt, wurden mit 1 g Natriumhydroxid in 43,4 g Wasser homogen vermischt. In diese Lösung wurden 36,55 g Triethylentetramin (technisch) unter ständigem Rühren eingetragen. Für das Gesamtreaktionsgemisch ergab sich damit eine in Molen ausgedrückte Zusammensetzung von:

1 $SiO_2$, 0,023 NaOH, 0,5 TETA und 12,7 $H_2O$.

Das Reaktionsgemisch wurde anschließend in einen 300 ml-Stahlautoklaven mit Tefloneinsatz eingebracht und für 168 Stunden bei 150 °C unter autogenem Druck hydrothermal behandelt. Der entstandene kristalline Niederschlag wurde von der Mutterlauge abfiltriert, mit Wasser gewaschen und bei 120 °C ca. 16 h in Luft getrocknet. Das erhaltene feste kristalline Siliziumdioxidprodukt wurde dann für 4 h in Luft bei 600 °C kalziniert. Das kalzinierte Produkt war frei von organischen Verbindungen und wies keine amorphen Bestandteile mehr auf. Die Analyse der Röntgendiffraktometrie des kalzinierten Produktes ist in Tabelle III dargestellt. Weiterhin ist das Produkt durch folgende Werte charakterisiert:

| - Spezifisches Gewicht | $1,66 \pm 0,03$ g/cm$^3$, |
|---|---|
| - Porenvolumen | $2,54 \pm 0,1$ cm$^3$/g. |

Das erfindungsgemäße Siliziumdioxid dieses Beispiels weist weiterhin z.B. eine Adsorptionskapazität von 12,3 Gew.-% für Ethanol auf (ermittelt durch Aufnahme der Adsorptionsisotherme).

**Patentansprüche**

1. Kristallines Siliziumdioxid, dadurch gekennzeichnet, daß es durch wenigstens 2-stündiges Kalzinieren in Luft bei wenigstens 550 °C erhältlich ist, ein Röntgenpulver-Beugungsdiagramm mit den folgenden mittleren bis intensiven d-Werten

d-Å
$11,0 \pm 0,2$ (1 oder 2 Werte in diesem Bereich)
$3,87 \pm 0,03$
$3,41 \pm 0,02$

und ein Porenvolumen von wenigstens 1 cm$^3$/g aufweist.

2. Kristallines Siliziumdioxid nach Anspruch 1 dadurch gekennzeichnet, daß es ein Porenvolumen von 1,0 bis 3 cm$^3$/g aufweist.

3. Kristallines Siliziumdioxid nach Anspruch 1 oder 2, dadurch gekennzeichnet, daß es die folgenden 10 stärksten d-Werte aufweist.

d-Å
$11,65 \pm 0,2$
$11,1 \pm 0,2$
$10,85 \pm 0,2$
$4,36 \pm 0,03$
$4,19 \pm 0,03$
$3,87 \pm 0,03$

3,68 ± 0,03
3,61 ± 0,02
3,46 ± 0,02
3,41 ± 0,02

4. Kristallines Siliziumdioxid nach Anspruch 3, dadurch gekennzeichnet, daß es ein Porenvolumen von 1 bis 2 cm$^3$/g, vorzugsweise 1,1 bis 1,6 cm$^3$/g, aufweist.

5. Kristallines Siliziumdioxid nach Anspruch 1 oder 2, dadurch gekennzeichnet, daß es die folgenden 8 stärksten d-Werte aufweist.
d-Å
17,7 ± 0,2
11,2 ± 0,2
10,0 ± 0,1
3,86 ± 0,03
3,82 ± 0,03
3,75 ± 0,02
3,72 ± 0,02
3,41 ± 0,02

6. Kristallines Siliziumdioxid nach Anspruch 5, dadurch gekennzeichnet, daß es ein Porenvolumen von 2 bis 3 cm$^3$/g, vorzugsweise 2,3 bis 2,8 cm$^3$/g, aufweist.

7. Verfahren zur Herstellung eines kristallinen Siliziumdioxides nach Anspruch 1, dadurch gekennzeichnet, daß man bin Reaktionsgemisch, enthaltend nichtkristallines Siliziumdioxid und pro Mol des nichtkristallinen Siliziumdioxides
- ausgedrückt in Molen an Oxid 0,001 bis 0,2 Mol Alkalimetalloxid und/oder -hydroxid,
- 0,35 bis 1.0 Mol organisches Amin und
- 10 bis 200 Mol Wasser,
bei Temperaturen von 80 bis 250 °C, vorzugsweise 120 bis 180 °C, einer hydrothermalen Behandlung unterwirft, bis sich ein Amin enthaltender, kristalliner Siliziumdioxid-Vorläufer gebildet hat, wonach man diesen Vorläufer isoliert und durch Kalzinieren bei
wenigstens 550 °C in das kristalline, aminfreie Siliziumdioxid überführt.

8. Verfahren nach Anspruch 7, dadurch gekennzeichnet, daß das Reaktionsgemisch pro Mol des nichtkristallinen Siliziumdioxides die übrigen Bestandteile in folgenden Mengen enthält:
- ausgedrückt in Molen an Oxid 0,02 bis 0,05 Mol Alkalimetalloxid und/oder -hydroxid,
- 0,35 bis 0.7 Mol organisches Amin und
- 10 bis 15 Mol Wasser.

9. Verfahren nach Anspruch 7 oder 8, dadurch gekennzeichnet, daß das Amin Tetraethylendiamin ist.

**Claims**

1. Crystalline silicon dioxide, characterised in that it is obtainable by at least 2 hours' calcining in air at at least 550°C, has an X-ray powder diffraction pattern having the following medium to intensive d-values
d-Å
11.0 ± 0.2 (1 or 2 values in this range)
3.87 ± 0.03
3.41 ± 0.02,
and a pore volume of at least 1 cm$^3$/g.

2. Crystalline silicon dioxide according to Claim 1, characterised in that it has a pore volume of 1.0 to 3 cm$^3$/g.

3. Crystalline silicon dioxide according to Claim 1 or 2, characterised in that it has the following 10 strongest d-values:
d-Å

11.65 ± 0.2
11.1 ± 0.2
10.85 ± 0.2
4.36 ± 0.03
4.19 ± 0.03
3.87 ± 0.03
3.68 ± 0.03
3.61 ± 0.02
3.46 ± 0.02
3.41 ± 0.02

4. Crystalline silicon dioxide according to Claim 3, characterised in that it has a pore volume of 1 to 2 $cm^3$/g, preferably 1.1 to 1.6 $cm^3$/g.

5. Crystalline silicon dioxide according to Claim 1 or 2, characterised in that it has the following 8 strongest d-values:
d-Å
17.7 ± 0.2
11.2 ± 0.2
10.0 ± 0.1
3.86 ± 0.03
3.82 ± 0.03
3.75 ± 0.02
3.72 ± 0.02
3.41 ± 0.02.

6. Crystalline silicon dioxide according to Claim 5, characterised in that it has a pore volume of 2 to 3 $cm^3$/g, preferably 2.3 to 2.8 $cm^3$/g.

7. A method for producing a crystalline silicon dioxide according to Claim 1, characterised in that a reaction mixture, containing non-crystalline silicon dioxide and, per mole of the non-crystalline silicon dioxide,
   - expressed in moles of oxide 0.001 to 0.2 moles alkali metal oxide and/or hydroxide,
   - 0.35 to 1.0 moles organic amine and
   - 10 to 200 moles water,
is subjected to hydrothermal treatment at temperatures of 80 to 250°C, preferably 120 to 180°C, until an amine-containing, crystalline silicon dioxide precursor has formed, whereafter this precursor is isolated and is converted into the crystalline, amine-free silicon dioxide by calcining at at least 550°C.

8. A method according to Claim 7, characterised in that the reaction mixture, per mole of the non-crystalline silicon dioxide, contains the other constituents in the following amounts:
   - expressed in moles of oxide 0.02 to 0.05 moles alkali metal oxide and/or hydroxide,
   - 0.35 to 0.7 moles organic amine and
   - 10 to 15 moles water.

9. A method according to Claim 7 or 8, characterised in that the amine is tetraethylene diamine.

**Revendications**

1. Dioxyde de silicium cristallin, caractérisé en ce qu'il est obtenu par deux heures au moins de calcination à l'air à une température d'au moins 550°C, en ce qu'il présente un diagramme de diffraction des rayons X par une poudre qui a les valeurs suivantes de d correspondant à des raies d'intensité moyenne à forte :
d - Å
11,0 ± 0,2 (1 ou 2 valeurs dans cette zone),
3,87 ± 0,03
3,41 ± 0,02, et
un volume des pores valant au moins 1 $cm^3$/g.

2. Dioxyde de silicium cristallin suivant la revendication 1, caractérisé en ce qu'il présente un volume des pores de 1,0 à 3 $cm^3$/g.

3. Dioxyde de silicium cristallin selon la revendication 1 ou 2, caractérisé en ce qu'il présente les 10 valeurs suivantes de raies les plus intenses correspondant à des valeurs de d :

d - Å
11,65 ± 0,2
11,1 ± 0,2
10,85 ± 0,2
4,36 ± 0,03
4,19 ± 0,03
3,87 ± 0,03
3,68 ± 0,03
3,61 ± 0,02
3,46 ± 0,02
3,41 ± 0,02

4. Dioxyde de silicium cristallin selon la revendication 3, caractérisé en ce qu'il présente un volume des pores de 1 à 2 $cm^3$/g, avantageusment de 1,1 à 1,6 $cm^3$/g.

5. Dioxyde de silicium cristallin selon la revendication 1 ou 2, caractérisé en ce qu'il présente les 8 raies suivantes les plus intenses correspondant à des valeurs de d :

D-Å
17,7 ± 0,2
11,2 ± 0,2
10,0 ± 0,1
3,86 ± 0,03
3,82 ± 0,03
3,75 ± 0,02
3,72 ± 0,02
3,41 ± 0,02

6. Dioxyde de silicium cristallin selon la revendication 5, caractérisé en ce qu'il présente un volume des pores de 2 à 3 $cm^3$/g, avantageusement de 2,3 à 2,8 $cm^3$/g.

7. Procédé de préparation d'un dioxyde de silicium cristallin suivant la revendication 1, caractérisé en ce qu'on soumet un mélange réactionnel, contenant du dioxyde de silicium non cristallin et, par mole du dioxyde de silicium non cristallin :
   - exprimé en moles d'oxyde 0,001 à 0,2 mole d'un oxyde et/ou d'un hydroxyde de métal alcalin,
   - 0,35 à 1,0 mole d'une amine organique, et
   - 10 à 200 moles d'eau,
   à des températures de 80 à 250°C, avantageusement 120 à 180°C, à un traitement hydrothermique jusqu'à formation d'un précurseur de dioxyde de silicium cristallin contenant de l'amine, puis l'on isole ce précurseur et on le transforme, par calcination à une température d'au moins 550°C, en le dixoyde de silicium cristallin et sans amine.

8. Procédé selon la revendication 7, caractérisé en ce que le mélange réactionnel contient, par mole du dioxyde de silicium non cristallin, les autres constituants présents en les quantités suivantes :
   - exprimé en moles d'oxyde 0,02 à 0,05 mole d'un oxyde et/ou hydroxyde de métal alcalin,
   - 0,35 à 0,7 mole d'une amine organique, et
   - 10 à 15 moles d'eau.

9. Procédé selon la revendication 7 ou 8, caractérisé en ce que l'amine est la tétraéthylène diamine.